# EUROPÄISCHE PATENTSCHRIFT

(11) **EP 2 769 427 B1**
(45) Veröffentlichungstag und Bekanntmachung des Hinweises auf die Patenterteilung: **06.01.2016**
(21) Anmeldenummer: 12784219.3
(22) Anmeldetag: 10.10.2012
(51) Int. Cl.: H01M 4/04, C01B 31/00, H01M 4/136, H01M 4/36, H01M 10/052, H01M 4/1393, C01B 17/22, H01M 4/1397, H01M 4/58

(54) **AKTIVMATERIAL FÜR BATTERIEN**
ACTIVE MATERIAL FOR BATTERIES
MATIÈRE ACTIVE POUR BATTERIES

(30) Priorität: 17.10.2011 DE 102011084646
(43) Veröffentlichungstag der Anmeldung: 27.08.2014
(73) Patentinhaber: Volkswagen Aktiengesellschaft, 38436 Wolfsburg (DE); Rockwood Lithium GmbH, 65926 Frankfurt/M (DE)
(72) Erfinder: JEONG, Sangsik, 89075 Ulm (DE); BRESSER, Dominic, 48153 Münster (DE); WINTER, Martin, 48149 Münster (DE); PASSERINI, Stefano, 89081 Ulm (DE)
(74) Vertreter: Fitzner, Uwe
(86) Internationale Anmeldenummer: PCT/EP2012/070049
(87) Internationale Veröffentlichungsnummer: WO 2013/057023

(56) Entgegenhaltungen:
- WO-A1-99/39818
- WO-A1-2008/069633
- WO-A1-2012/055731
- WO-A2-2005/089145
- JP-A- 2003 327 473
- US-A1- 2007 116 625
- WANG J ET AL: "SULFUR COMPOSITE CATHODE MATERIALS FOR RECHARGEABLE LITHIUM BATTERIES", ADVANCED FUNCTIONAL MATERIALS, WILEY - V C H VERLAG GMBH & CO. KGAA, DE, Bd. 13, Nr. 6, 1. Juni 2003 (2003-06-01), Seiten 487-492, XP001162512, ISSN: 1616-301X, DOI: 10.1002/ADFM.200304284
- YU X-G ET AL: "Lithium storage in conductive sulfur-containing polymers", JOURNAL OF ELECTROANALYTICAL CHEMISTRY AND INTERFACIAL ELECTRO CHEMISTRY, ELSEVIER, AMSTERDAM, NL, Bd. 573, Nr. 1, 15. November 2004 (2004-11-15), Seiten 121-128, XP004607085, ISSN: 0022-0728, DOI: 10.1016/J.JELECHEM.2004.07.004
- JI X ET AL: "A highly ordered nanostructured carbon-sulphur cathode for lithium-sulphur batteries", NATURE MATERIALS, NATURE PUBLISHING GROUP, GB, Bd. 8, Nr. 6, 1. Juni 2009 (2009-06-01), Seiten 500-506, XP002569830, ISSN: 1476-1122, DOI: 10.1038/NMAT2460 [gefunden am 2009-05-17]

## Beschreibung

Die vorliegende Anmeldung nimmt die Priorität der DE 10 2011 084 646 in Anspruch.

Die vorliegende Erfindung betrifft ein Aktivmaterial für Batterien.

### Stand der Technik:

Anwendungen für Batterien, wie z.B. in Elektro-Fahrzeugen oder aber auch Speichertechnologien für erneuerbare Energien (z.B. Windenergie, Solarenergie, etc.) erfordern die Entwicklung neuer Technologien für wieder aufladbare Batterien mit deutlich höheren spezifischen Energien als sie bislang zur Verfügung stehen bzw. kommerziell erhältlich sind.

Die Lithium-Schwefel-Batterie stellt für diese Anwendungsbereiche eine sehr vielversprechende Technologie dar. So liegt die theoretische gravimetrische Kapazität von elementarem Schwefel (S₈) bei 1672 mAh g⁻¹ oder aber anders ausgedrückt seine theoretische Energiedichte bei bis zu 2600 Wh kg⁻¹ (sprich bis zu fünfmal höher als die Energiedichte der bereits weit verbreiteten Lithium-Ionen-Technologie).

Darüber hinaus bietet die Verwendung von Schwefel bzw. schwefelbasierten Elektrodenmaterialien weitere generelle Vorteile, wie u.a. einen natürlichen, inhärenten "Overcharge-Schutz-Mechanismus", gesundheitliche Unbedenklichkeit, Umweltverträglichkeit, ein reichhaltiges Rohstoffvorkommen sowie geringe Förder- und Produktionskosten.

Die Verwendung von Schwefel als Kathodenmaterial beinhaltet jedoch auch eine Reihe an Herausforderungen, die folgend aufgelistet sind:
- Schwefel und Schwefel-basierte Verbindungen (z. B. Li₂S) besitzen eine äußerst geringe elektronische und ionische Leitfähigkeit.
- Die während der Lade- und Entlade-Vorgänge intermediär gebildeten Lithium-Polysulfide (Li₂Sₙ, mit 2<n<8) sind sehr leicht löslich in den verwendeten organischen, flüssigen Elektrolyten. Dies führt zum einen zur Abscheidung von elektronisch nichtleitendem, nichtlöslichem Li₂S₂ und Li₂S an der Kathodenoberfläche, wodurch dieses elektrochemisch nicht weiter zu Verfügung steht, zum anderen können diese Polysulfide auch zur Anodenseite diffundieren und sich dort als Li₂S₂ und Li₂S abscheiden, was zu einer Passivierung der Anodenoberfläche führen kann oder aber sie werden dort erneut reduziert und diffundieren zurück zu Kathodenseite. Im letzteren Fall spricht man vom sogenannten "Shuttle-Mechanismus", der zu einer Herabsetzung der spezifischen Kapazität und zunehmender Selbstentladung der Batterie führt.
- Auf der anderen Seite ist eine möglichst große Kontaktfläche zwischen Aktivmaterial und dem flüssigen Elektrolyten allerdings notwendig, aufgrund der bereits beschriebenen äußerst schlechten ionischen Leitfähigkeit des Aktivmaterials.
- Während wiederholter Lade- und Entlade-Zyklen kommt es bedingt durch die hiermit wiederholte verbundene Volumenexpansion bzw. -abnahme zu Veränderungen der Elektrodenmorphologie und hierdurch schlussendlich zu einer Agglomeration der Schwefel-Partikel, wodurch erneut die äußerst geringe elektronische und ionische Leitfähigkeit negativ zum Tragen kommt. Es wird in diesem Fall lediglich die Oberfläche der Partikel-Agglomerate elektrochemisch aktiv, die durch eine Partikel-Agglomeration selbstverständlich abnimmt. Dies wiederum führt zu einem Absinken der erzielbaren spezifischen Kapazität. (Jeon et al. Journal of Materials Processing Technology 143-144 (2003) 93-97.)

In Summe führt dies zu einer praktisch erzielbaren Kapazität, die deutlich unterhalb der theoretisch möglichen liegt und im Laufe der Zyklisierung i.d.R. schnell abnimmt.

Dadurch bedingt kommt es zu einer geringen Zyklen-Stabilität sowie einer geringen Effizienz der Lade- und Entlade-Vorgänge.

Einen guten Überblick und Einstieg in das Thema bieten Ji & Nazar Journal of Materials Chemistry 20 (2010) 9821-9826 und Ji et al. Nature Materials 8 (2009) 500-506.

Der Entlade-Vorgang einer Schwefel-Elektrode kann ganz allgemein in summa durch die folgende Reaktionsgleichung beschrieben werden:

16 Li + S₈ --> 8 Li₂S

Anhand dieser Reaktionsgleichung lässt sich bereits erkennen, dass für die Verwendung von elementarem Schwefel als Kathodenmaterial eine anderweitige Lithium-Quelle unerlässlich ist. Daher wird als Anode meist metallisches Lithium verwendet, welches nach wie vor die Gefahr der Dendriten-Bildung während wiederholter Lade- und Entlade-Zyklen birgt.

Zum Teil wurde im Stand der Technik bereits versucht, anstelle des elementaren Schwefels das Endprodukt des Entlade-Vorganges, also Li₂S als Ausgangsmaterial zu verwenden.
Die zu überwindenden Herausforderungen für eine breite Verwendung von Li₂S als Kathodenmaterial sind ähnlich gelagert, wie für elementaren Schwefel, da die elektrochemische Reaktion selbstverständlich die gleiche ist. Es wird lediglich das ursprüngliche Produkt als Edukt verwendet.
Entsprechender Stand der Technik findet ist beispielsweise aus Wang et al. Electrochimica Acta 55 (2010) 7010-7015; Wang et al. Carbon 46 (2008) 229-235; Wang et al. Electrochemistry Communications 4 (2002) 499-502; Hassoun & Scrosati Angewandte Chemie 49 (2010) 2371-2374; Wang et al. Adv. Funct. Mater 13, No. 6 (2003) 487-492; Choi et al. Journal of Alloys and Compounds 449 (2008) 313-316; Zhang et al. Electrochimica Acta 54 (2009) 3708-3713; Choi et al. Materials Science Forum 510-511 (2006) 1082-1085 und Ji et al. Nature Materials 8 (2009) 500-506 bekannt.

Die im Stand der Technik aufgeführten Methoden sind i.d.R. auf die Verwendung von elementarem Schwefel (S₈) als Ausgangsmaterial beschränkt, So wird beispielsweise eine Technik zur Kohlenstoffbeschichtung von Schwefel-Partikeln mittels Sputter-Technik beschrieben (Y.-J. Choi et al., Journal of Power Sources 184 (2008), 548-552). Diese ist allerdings sehr aufwendig, dadurch teuer, und deswegen, sowie aufgrund der begrenzten Mengenkapazitäten dieser Technologie nicht für eine Ausweitung auf großtechnische Maßstäbe geeignet.

Weiterhin werden viele verschiedene Arten der thermischen Einlagerung bzw. Absorption von Schwefel in bzw. durch mesoporöse Kohlenstoffverbindungen unterschiedlichster Formen beschrieben, bei denen die relativ niedrige Schmelztemperatur von Schwefel (115°C) ausgenutzt wird. Diese sind jedoch allesamt ebenfalls sehr aufwendig und erfordern normalerweise die Verwendung nanoskaliger bzw. nanostrukturierter Kohlenstoffmaterialien, die wiederum verhältnismäßig teuer sind.
Insbesondere eine nachgelagerte Lithiierung mittels n-Butyllithium, wie sie in Yang et al., Nano Lett. 2010, 10, 1486-1491 beschrieben wird ist mit mehreren zusätzlichen Verfahrensschritten und dem Einsatz einer Reihe an zusätzlichen Reagenzien verbunden, somit ebenfalls teuer und für den großtechnischen Einsatz unbrauchbar.
Auch eine Verwendung von polymeren Nanofasern wie in Qiu et al., Electrochimica Acta 55 (2010), 4632-4636 beschrieben ist aufgrund der Komplexität des Verfahrens nur wenig aussichtsreich auf größere Maßstäbe übertragen zu werden. Gleichzeitig setzt die Verwendung größerer Mengen eines solchen Polymers, sprich eines elektrochemisch inaktiven Additives, die praktisch erzielbare gravimetrische Kapazität sowie die gravimetrische sowie volumetrische Energiedichte in Betrachtung des Gesamtsystems "Batterie" deutlich herab.
Zudem wird auch hier elementarer Schwefel verwendet, dessen vergleichsweise niedrige Schmelztemperatur erneut eine wichtige Voraussetzung für die thermische Einlagerung des Schwefels in die PolymerMatrix darstellt.
Eine Verwendung von multi-walled carbon nanotubes (Yuan et al., Journal of Power Sources 189 (2009), 1141-1146) oder nanowires, die für sich bereits sehr teuer sind, zur Ausbildung einer elektronisch leitfähigen Kohlenstoffmatrix lässt eine Nutzung dieser Materialien in größerem Umfang ebenfalls als wenig praktikabel erscheinen.

Vor allem sollte beachtet werden, dass bei vielen der oben aufgeführten Lösungsansätze Schwefel auf Kohlenstoff aufgetragen wird. Dies ist wiederum lediglich dank des geringeren Schmelzpunktes von Schwefel möglich. Zudem trägt diese Anordnung vor allem der Volumenexpansion (∼ + 22%, vgl. He et al., Journal of Power Sources 190 (2009) 154-156) im Zusammenhang mit der Lithiierung Rechnung.
Hierbei ist jedoch stets zu berücksichtigen, dass sich durch diese Volumenänderungen, wie bereits beschrieben, die Elektrodenmorphologie im Verlauf der Lade- und Entlade-Vorgänge ändert. Die Auftragung von Schwefel auf Kohlenstoff birgt somit stets das Risiko des direkten Kontaktes der Schwefelpartikel und somit eine bereits erwähnte Partikel-Agglomeration, sowie die Ablösung des Aktivmaterials von den Kohlenstoffmaterialien und somit einen Verlust der elektronischen Leitfähigkeit, insbesondere sofern durch eine möglichst dichte Anordnung der Partikel eine möglichst hohe volumetrische Energiedichte erreicht werden soll und die Partikel daher möglichst dicht zueinander angeordnet werden.
Zudem ist eine möglichst große Kontaktfläche zwischen Schwefel und dem Elektrolyten zur Gewährleistung einer möglichst hohen Kontaktfläche zwischen Lithium-Ionen und Schwefel zwar einerseits erwünscht, führt jedoch auf der anderen Seite zu einer Diffusion löslicher Polysulfid-Ionen, welche dann zu den bereits beschriebenen negativen Begleiterscheinungen führt, was eine der Hauptherausforderungen bei der Entwicklung schwefelbasierter Elektrodenmaterialien darstellt.
Aus Hassoun et al, Journal of Power Sources 196 (2011) 343-348 sind Li₂S-C Komposite bekannt, die durch einfaches Vermischen erhalten werden. Eine gleichmäßige bzw. homogene Umhüllung der Li₂S-Teilchen wird nicht erreicht. Aus Moskon et al., Journal of Power Sources 174 (2007) 683-688 sind mit Kohlenstoff umhüllte TiO₂-Partikel bekannt, die durch Beschichtung von wässrigen Zitronensäure und anschließende thermische Behandlung erhalten werden.

### Aufgabe:

Aufgabe der Erfindung war es nun die bekannten Nachteile des Standes der Technik zu überwinden, insbesondere unter Berücksichtigung einer später möglichen großtechnischen Anwendung des Verfahrens.
Demgemäß sollte unter anderem ein preiswerter, effektiver und zuverlässiger Weg gefunden werden, Aktivmaterialien für Batterien herzustellen.
Weiterhin war es Aufgabe entsprechend vorteilhafte Aktivmaterialien für Batterien, entsprechende Elektroden und Batterien selbst zur Verfügung zu stellen.

### Lösung:

Diese Aufgabe wird durch die erfindungsgemäßen Verfahren, die erfindungsgemäße Verwendung und die erfindungsgemäßen Materialien gelöst.

### Begriffsdefinitionen:

Im Rahmen der vorliegenden Erfindung sind alle Mengenangaben, sofern nicht anders angegeben, als Gewichtsangaben zu verstehen.
Sofern nicht anders angegeben, wurden/werden Größenangaben im Nanometerbereich oder Mikrometerbereich mittels Rasterelektronenmikroskopie (REM) bestimmt, bzw. sind so zu bestimmen.
Im Rahmen der vorliegenden Erfindung bedeutet der Begriff "Zimmertemperatur" eine Temperatur von 20°C. Temperaturangaben sind, soweit nicht anders angegeben, in Grad Celsius (°C).
Sofern nichts anderes angegeben wird, werden die angeführten Reaktionen bzw. Verfahrensschritte bei Normaldruck/Atmosphärendruck, d.h. bei 1013 mbar, durchgeführt.
Im Rahmen der vorliegenden Erfindung schließt die Formulierung "und/oder" sowohl jede beliebige als auch alle Kombinationen der in der jeweiligen Auflistung genannten Elemente ein.

### Detaillierte Beschreibung:

Gegenstand der vorliegenden Erfindung ist insbesondere ein Verfahren zur Herstellung eines Aktivmaterials für Batterien umfassend die folgenden Schritte a) bis d) oder bestehend aus diesen Schritten:
a) Vorlegen elektrochemisch aktiver Partikel,
b) optional Zerkleinern der elektrochemisch aktiven Partikel zu einer durchschnittlichen Teilchengröße, gemessen mittels RasterElektronenmikroskopie, von kleiner als 2 µm,
c) Zugabe einer organischen Kohlenstoffverbindung, optional in einem geeigneten organischen Lösemittel, und Vermischen,
d) Erhitzen der Mischung unter Schutzgas auf eine Temperatur oberhalb der Zersetzungsgrenze der organischen Verbindung, bevorzugt eine Temperatur von größer als 300°C, und unterhalb der Zersetzungstemperatur der elektrochemisch aktiven Partikel, wodurch sich die organische Kohlenstoffverbindung zu Kohlenstoff zersetzt und sich dieser als homogene Schicht auf der Oberfläche der elektrochemisch aktiven Partikel abscheidet.

Als elektrochemisch aktive Partikel werden im Rahmen der vorliegenden Erfindung bei dem Verfahren Li₂S-Partikel eingesetzt.
Dabei ist es Aufgrund der überaus geringen ionischen und elektronischen Leitfähigkeit von Li₂S notwendig, dass die durchschnittliche Teilchengröße, gemessen mittels REM, kleiner als 2 µm ist, um eine hohe spezifische Oberfläche zu erreichen.
Sofern das eingesetzte Li₂S bereits eine durchschnittliche Teilchengröße von kleiner als 2 µm hat, ist ein Vermahlen nicht notwendig (aber dennoch möglich).

Die zuzugebende Kohlenstoffverbindung bzw. Kohlenstoffquelle muss so ausgewählt werden, dass sie sich beim Erhitzen unter Schutzgas bei einer Temperatur unterhalb der Schmelztemperatur der elektrochemisch aktiven Partikel zu Kohlenstoff zersetzt.
Bevorzugt sind im Rahmen der vorliegenden Erfindung als Kohlenstoffverbindungen Zucker, insbesondere Saccharose, oder Polyacrylnitril.
Polyacrylnitril bietet gegenüber Zucker den Vorteil, dass es sich in N-Methyl-2-Pyrrolidon (NMP) lösen lässt, was zu einer gleichmäßigeren Kohlenstoffbeschichtung auf den Li₂S-Partikeln führt. Diese Tatsache lässt sich anhand der verbesserten Effizienz während der Lade- und Entlade-Vorgänge erkennen.
Doch auch bei Verwendung von Zucker als Kohlenstoffquelle lassen sich hervorragende Ergebnisse erzielen. Diese liegen meist deutlich über den literaturbekannten Ergebnissen.

Zur Zersetzung der Kohlenstoffverbindungen zum Kohlenstoff werden diese unter Schutzgas, bevorzugt Helium, Neon, Argon oder Stickstoff, insbesondere bevorzugt Stickstoff, für 2 bis 5 Stunden, bevorzugt 3 Stunden auf eine Temperatur von bis zu 850°C, bevorzugt 550°C bis 750°C, erhitzt.
Die Aufheizung zur Zersetzungstemperatur kann dabei im Prinzip ohne Auswirkung auf das Produkt mit beliebigen Heizrampen erfolgen, aus praktischen Gründen wird bevorzugt eine Temperaturanstieg von ungefähr 2 bis 4°C/Minute, insbesondere 3°C/Minute, gewählt.

Das Aufheizen bzw. Halten bei der Temperatur kann in fachbekannten Öfen erfolgen, bevorzugt in Rohrofen.

Die derart dargestellten mit einer Kohlenstoffschicht ummantelten Li₂S-Partikel können dann zu Elektroden weiterverarbeitet werden. Ein entsprechendes Verfahren ist ebenfalls Gegenstand der vorliegenden Erfindung und umfasst die Schritte i) bis iv) oder besteht aus diesen:
i) Vorlegen eines gemäß dem oben beschriebenen erfindungsgemäßen Verfahren hergestellten Aktivmaterials,
ii) Zusetzen mindestens eines elektronisch leitfähigen Additivs, gegebenenfalls unter Zugabe mindestens eines geeigneten Binders,
iia) optional Zugabe weiterer Zusatzstoffe,
iii) Vermischen der Materialien,
iv) Trocknung des erhaltenen Materials.

Beispiele für einsetzbare elektronisch leitfähige Additive sind z.B. kohlenstoffhaltige Materialien.

Bevorzugt einsetzbare kohlenstoffhaltige Materialien sind ausgewählt aus der Gruppe bestehend aus Ruß, synthetischem oder natürlichem Graphit, Graphen, Kohlenstoffnanopartikeln, Fullerenen oder Mischungen davon.
Ein verwendbarer Ruß ist beispielsweise unter der Bezeichnung Ketjenblack(R) erhältlich.
Ein bevorzugt verwendbarer Ruß ist beispielsweise unter der Handelsbezeichnung Super P^{(R)} oder Super P^{(R)} Li erhältlich.

Die kohlenstoffhaltigen Materialien können eine mittlere Partikelgröße im Bereich von 1 nm bis 500 µm, bevorzugt 5 nm bis 1 µm, besonders bevorzugt 10 nm bis 60 nm, aufweisen.

Geeignete Binder sind Polyacrylnitril (PAN), Polymethylmethacrylat (PMMA), Polyethylenoxid (PEO), Cellulose, Cellulosederivate Poly(vinylidendifluorid-hexafluoropropylen)-Copolymer (PVDF-HFP), Polytetrafluoroethylen (PTFE), Styrol-Butadien-Kautschuk (SBR) und Polyvinylidenfluorid (PVDF).
Bevorzugt wird im Rahmen der vorliegenden Erfindung Polyvinylidenfluorid (PVDF) als Binder eingesetzt.

Weitere Zusatzstoffe können beispielsweise beschichtete Lithiumpulver sein. Diese können als Lithium-Reservoir dienen, um einen anfänglichen irreversiblen Verlust an Lithium des eigentlichen Aktivmaterials auszugleichen. Normalerweise kann aber auf die Zugabe weiterer Zusatzstoffe verzichtet werden.

Die Aktivmaterialien können dabei mit dem mindestens einen elektronisch leitfähigen Additiv und dem mindestens einen geeigneten Binder in üblichen Verhältnissen gemischt werden.
In einer Variante der vorliegenden Erfindung beträgt das Gewichts-Verhältnis Aktivmaterial:Additiv:Binder 4:5:1.

Das so hergestellte Kathodenmaterial kann dann in fachüblicher Weise zu einer Elektrode verarbeitet werden.

Beispielsweise kann es auf Aluminium-, Nickel-, oder Al/Ni-Folie aufgetragen werden, die als Stromabnehmer dienen.
Gleichwohl sind auch weitere fachüblich bekannte Stromabnehmer verwendbar.

Wie in der Literatur bereits vielfach diskutiert, spielt auch die Wahl eines geeigneten Elektrolyten sowie des passenden Separators eine Rolle (vgl. Peled et al. J. Electrochem. Soc., 136, No. 6 (1989) 1621-1625; Jin et al. Journal of Power Sources 117 (2003) 148-152; Chang et al. Journal of Power Sources 112 (2002) 452-460).

Im Rahmen der vorliegenden Erfindung können als Elektrolyte sämtliche dem Fachmann bekannte Elektrolyte verwendet werden, umfassend organische Elektrolyte beinhaltend dem Fachmann bekannte Lithium enthaltende Leitsalze, sowie ionische Flüssigkeiten beinhaltend Leitsalze wie bspw. Lithium-bis(fluorosulfonyl)imid (LiFSI) oder Lithium-bis(trifluoromethansulfonyl)imid (LiTFSI) in 1-Butyl-1-methylpyrollidinium-bis(trifluoromethansulfonyl)imid (PYR₁₄TFSI), Polymer-Elektrolyte beinhaltend Leitsalze wie bspw. Polyethylenoxid (PEO) beinhaltend LiTFSI (und optional PYR₁₄TFSI) sowie optional flüssige organische Elektrolyte wie bspw. LiCF₃SO₃ in TEGDME, LiPF₆ in beliebigen Mischungen aus Ethylencarbonat (EC) / Dimethylcarbonat (DMC) / Diethylcarbonat (DEC) / Propylencarbonat (PC) sowie LiTFSI oder LiPF₆ oder LiBF₄ in einer Mischung aus Dimethoxyethan (DME) und 1,3-Dioxolan (DOL) oder ionische Flüssigkeiten, Festkörper-Elektrolyte und beliebige Kombinationen.
Bevorzugt können solche ausgewählt aus der Gruppe bestehend Lithium-bis(fluorosulfonyl)imid oder Lithium-bis(trifluoromethansulfonyl)imid in 1-Butyl-1-methylpyrollidinium-bis(trifluoromethansulfonyl)imid, Polyethylenoxid beinhaltend LiTFSI, Polyethylenoxid beinhaltend LiTFSI und PYR₁₄TFSI, LiCF₃SO₃ in TEGDME, LiPF₆ in beliebigen Mischungen aus Ethylencarbonat/ Dimethylcarbonat/Diethylcarbonat/Propylencarbonat, LiTFSI in Dimethoxyethan/1,3-Dioxolan, LiPF₆ in Dimethoxyethan/1,3-Dioxolan, LiBF₄ in Dimethoxyethan/1,3-Dioxolan, LiCF₃SO₃, in 3:7 Tetraethylenglykoldimethylether (TEGDME)/1,3-Dioxolan und Gemischen davon eingesetzt werden.
Insbesondere bevorzugt wird als Elektrolyt LiCF₃SO₃, in 3:7 Tetraethylenglykoldimethylether (TEGDME)/1,3-Dioxolan eingesetzt.

Im Rahmen der vorliegenden Erfindung können als Separatoren solche ausgewählt aus der Gruppe bestehend aus Polypropylen- und/oder Polypropylen-basierten Separatoren, Glasfaser-basierten Separatoren, keramischen Separatoren und Gemischen bzw. Kombinationen davon eingesetzt werden.
Im Falle von Polymer- sowie Festkörper-Elektrolyten können diese gleichzeitig auch als Separator dienen.
Insbesondere bevorzugt wird als Separator ein Dreilagen-Membranseparator eingesetzt, wie er z.B. als Celgard^{(R)} 2325 angeboten wird.

Wesentlicher Aspekt der vorliegenden Erfindung ist, dass bei der Herstellung der Aktivmaterialien kein Wasser als Lösungsmittel verwendet wird, da sich ansonsten Li₂O und H₂S bilden würden.
Damit würde das Aktivmaterial "verloren".

Gegenstand der vorliegende Erfindung ist weiterhin die Verwendung des erfindungsgemäß hergestellten Aktivmaterials als Kathodenmaterial in Lithium-Metall- und/oder Lithium-Ionen Batterien.

Die vorliegende Erfindung weist einige erhebliche Vorteile auf, von denen einige nachfolgend dargestellt werden:
Die Verwendung von Lithiumsulfid (Li₂S) als Aktivmaterial birgt abgesehen von einer theoretisch betrachtet geringeren spezifischen Kapazität (1166 mAh g⁻¹) einige Vorteile gegenüber elementarem Schwefel:
   Da es bereits lithiiert ist, kann es neben einer Verwendung in Lithium-Schwefel-Batterien auch als Kathodenmaterial in Lithium-Ionen-Batterien Verwendung finden. Dies ermöglicht die Nutzung anderer Anodenmaterialien [z. B. Graphit, Silicium, Zinn, etc.] als metallischem Lithium und lässt das hier vorgestellte Material somit unabhängig werden von der Verwendung metallischen Lithiums auf der Anodenseite.
Dies ist für die praktische Verwertbarkeit ein enormer Vorteil, da die Verwendung metallischen Lithiums nach wie vor die Gefahr der Dendriten-Bildung birgt.
Zum anderen erhöht es die Flexibilität der Einsatzmöglichkeiten des Materials und erlaubt eine Verwendung mit sämtlichen bereits kommerziell erfolgreichen bzw. zukünftigen Anodenmaterialien aus der Lithium-Ionen-Technologie. Darüber hinaus nimmt die Verwendung von Li₂S als Ausgangsmaterial die Volumenexpansion während der Lithiierung von Schwefel vorweg, welche zu Rissen in der Kohlenstoffummantelung führen würde. Auf diese Weise bleibt die die Li₂S-Partikel umgebende Kohlenstoffschicht auch während wiederholter Lade- und Entlade-Vorgänge intakt.
Dies hat zur Folge, dass die praktisch erzielte spezifische Kapazität (und somit die Energiedichte der Zelle) gesteigert , die Zyklen-Stabilität deutlich verbessert und eine Effizienz der Lade- und Entlade-Zyklen von nahezu 100% erreicht werden konnte.
Insgesamt ermöglicht dies eine deutlich höhere erreichbare Zyklen-Anzahl, insbesondere sofern im Gesamtsystem lediglich ein begrenzter Vorrat an Lithium-Ionen zur Verfügung steht und nicht wie bei einer Verwendung von Lithium-Metall ein großer Überschuss an diesen. Dies ist insbesondere im Hinblick auf eine Verwendung des Materials als Kathodenmaterial in Lithium-Ionen-Batterien unter Verwendung von bspw. Graphit als Anode von allerhöchster Wichtigkeit, da in diesem System eben keine externe Lithium-Quelle zur Verfügung steht.

Die homogene Kohlenstoffummantelung als solche erhöht überdies signifikant die elektronische Leitfähigkeit des dargestellten Aktivmaterials. Dies führt zu einer ausbleibenden elektronischen Isolierung von Li₂S-Partikeln und deren Agglomeraten, die dadurch elektrochemisch inaktiv würden und damit für die weiteren Lade- und Entlade-Vorgänge nicht mehr zur Verfügung stehen würden.

Insbesondere aber verhindert die homogene Kohlenstoffummantelung effektiv die Abwanderung der im Elektrolyten gelösten Polysulfide und deren Abscheidung an der Kathodenoberfläche (verbunden mit einer elektrochemischen Deaktivierung des dort abgeschiedenen Aktivmaterials) sowie an der Anodenoberfläche (verbunden mit einer zunehmenden Passivierung der Anode sowie insbesondere einem Einsetzen des sogenannten "Shuttle-Mechanismus", der für die Selbstentladung Schwefelbasierter Batteriesysteme verantwortlich ist).
Die homogene Kohlenstoffummantelung verhindert zudem den physischen Kontakt der Schwefel- bzw. Li₂S-Partikel und wirkt somit aktiv einer Partikel-Agglomeration im Zyklen-Verlauf entgegen.

Im Rahmen der vorliegenden Erfindung wurde nicht elementarer Schwefel sondern bevorzugt Li₂S als Ausgangsmaterial für die Kathoden verwendet.

Im Rahmen der vorliegenden Erfindung wurde für die elektrochemisch aktiven Partikel eine Art "Mikroreaktor" hergestellt, der den folgenden Anforderungen Rechnung trägt:
- Verhinderung einer Diffusion der löslichen Polysulfide zur Kathodenoberfläche bzw. zur Anodenseite und dortiger Abscheidung (Passivierung und "Shuttle-Mechanismus").
- Eine Verhinderung der Partikel-Agglomeration während der Lade- und Entlade-Vorgänge.
- Sicherstellung des elektronischen Kontakts zum Stromabnehmer. Gleichzeitig wurde im Rahmen der vorliegenden Erfindung sichergestellt, dass die "Hülle" dieses Mikroreaktors für den flüssigen Elektrolyten durchlässig ist, um den Transport der Lithium-Ionen zum Aktivmaterial zu gewährleisten.
Zudem wurden die bekannten Volumenänderungen durch die Lithiierung und Delithiierung berücksichtigt.

Für die "Reaktorhülle" wurde Kohlenstoff verwendet, da dieser über eine hohe elektronische Leitfähigkeit verfügt und die langkettigen löslichen Polysulfide im Innern des "Reaktors" hält, jedoch gleichzeitig für den Elektrolyten sowie die Lithium-Ionen durchlässig ist.
Durch die Verwendung von Li₂S anstelle elementaren Schwefels als Ausgangsmaterial konnten darüber hinaus die folgenden Vorteile ausgenutzt werden:
- Li₂S hat einen deutlich höheren Schmelzpunkt als elementarer Schwefel, und zwar liegt dieser bei etwa 938°C.
- Diese höheren Temperaturen sind für das erfindungsgemäße Verfahren zur Herstellung des Aktivmaterials, d.h. für die Auftragung einer homogenen Kohlenstoffschicht auf den Partikeln bzw. einer Kohlenstoffummantelung erforderlich.
- Durch die "Vorwegnahme" der Lithiierung ist auch die damit einhergehende Volumenexpansion vorweggenommen, somit muss eine Beschädigung des Kohlenstoffmantels durch eine solche Volumenexpansion nicht befürchtet werden.
- Da Li₂S bereits Lithium enthält muss auf der Anodenseite nicht zwingend auf metallisches Lithium zurückgegriffen werden, sondern es ist auch die Verwendung anderer Anodenmaterialen denkbar.

Das erfindungsgemäße Verfahren wird unter Verwendung kostengünstiger Materialien (wie bspw. Zucker, Acetonitril und Polyacrylnitril) durchgeführt, was einen enormen ökonomischen und zumindest teilweise ökologischen Vorteil bedeutet.

Das erfindungsgemäße Verfahren ist ein insgesamt kostengünstiges, da es ohne aufwendige Apparaturaufbauten auskommt. Daher ist eine großtechnische Anwendung äußerst schnell und einfach realisierbar.

Bei dem erfindungsgemäßen Verfahren werden nicht nur lediglich geringe Mengen an Elektrolyt benötigt, welches die Kosten für eine Batterie maßgeblich beeinflusst, sondern eine Verwendung nur geringer Mengen verbessert zudem noch überraschenderweise die Performance einer solchen Batterie, im Sinne einer gesteigerten spezifischen Kapazität, einer höheren Effizienz sowie einer verbesserten Zyklen-Stabilität.

Das erfindungsgemäße Verfahren ist zudem leicht und ohne größeren finanziellen sowie sonstigen Aufwand auf großtechnische Maßstäbe übertragbar.

Die erzielten Ergebnisse bei der Verwendung des erfindungsgemäß hergestellten Aktivmaterials übertreffen die allermeisten der in der Literatur publizierten Ergebnisse.
Hierzu soll der besseren Vergleichbarkeit halber angemerkt werden, dass sich die Werte für die erzielten spezifischen Kapazitäten immer auf den Anteil an Li₂S als Aktivmaterial beziehen. Beispiele einiger Varianten für Aktivmaterialien gemäß der vorliegenden Erfindung lassen sich wie folgt charakterisieren:
Variante 1 ist ein Aktivmaterial für Batterien, wobei es elektrochemisch aktive Partikel enthält, die mit einer homogenen Hülle beschichtet bzw. ummantelt sind.
Variante 2 ist ein Aktivmaterial gemäß Variante 1, wobei die elektrochemisch aktiven Partikel Li₂S-Partikel sind.
Variante 3 ist ein Aktivmaterial gemäß Variante 1 oder 2 wobei die Hülle über eine hohe elektronische Leitfähigkeit verfügt.
Variante 4 ist ein Aktivmaterial gemäß einer oder mehrerer der vorhergehenden Varianten, wobei die Hülle für flüssige Elektrolyte durchlässig ist.
Variante 5 ist ein Aktivmaterial gemäß einer oder mehrerer der vorhergehenden Varianten, wobei die Hülle Kohlenstoff enthält.
Variante 6 ist ein Aktivmaterial gemäß einer oder mehrerer der vorhergehenden Varianten, wobei der in der Hülle enthaltene Kohlenstoff aus einer organischen Kohlenstoffquelle stammt.
Variante 7 ist ein Aktivmaterial gemäß einer oder mehrerer der vorhergehenden Varianten, wobei der in der Hülle enthaltene Kohlenstoff durch thermische Zersetzung einer organischen Kohlenstoffquelle erzeugt wird.
Variante 8 ist ein Aktivmaterial gemäß einer oder mehrerer der vorhergehenden Varianten, wobei der in der Hülle enthaltene Kohlenstoff durch thermische Zersetzung von Saccharose oder Polyacrylnitril, vorzugsweise durch thermische Zersetzung von Polyacrylnitril erzeugt wird.
Variante 9 ist ein Aktivmaterial gemäß einer oder mehrerer der vorhergehenden Varianten, wobei dem mit einer Hülle beschichteten bzw. ummantelten elektrochemisch aktiven Partikeln ein elektronisch leitfähiges Additiv zugesetzt ist.

Von der vorliegenden Erfindung umfasst sind auch Batterien, die unter Verwendung der erfindungsgemäßen bzw. der mittels der erfindungsgemäßen Verfahren hergestellten Aktivmaterialien hergestellt wurden, sowie die entsprechende Verwendung der erfindungsgemäßen bzw. der mittels der erfindungsgemäßen Verfahren hergestellten Aktivmaterialien

Die verschiedenen Ausgestaltungen der vorliegenden Erfindung, z.B. aber nicht ausschließlich diejenigen der verschiedenen abhängigen Ansprüche, können dabei in beliebiger Art und Weise miteinander kombiniert werden.

Die durch das spezielle Vorgehen der vorliegenden Erfindung erhaltene Schicht von Kohlenstoff auf der Oberfläche der elektrochemisch aktive Partikel stellt eine homogene, gleichmäßige und geschlossene Beschichtung dar. Eine solche war durch die aus dem Stand der Technik bekannten Verfahren, bei denen eine bereits karbonisierte Substanz mit dem Aktivmaterial vermischt wurde, nicht erhältlich.

Die Erfindung wird nun unter Bezugnahme auf die folgenden nichtlimitierenden Figuren und Beispiele erläutert.

### Figurenbeschreibung:

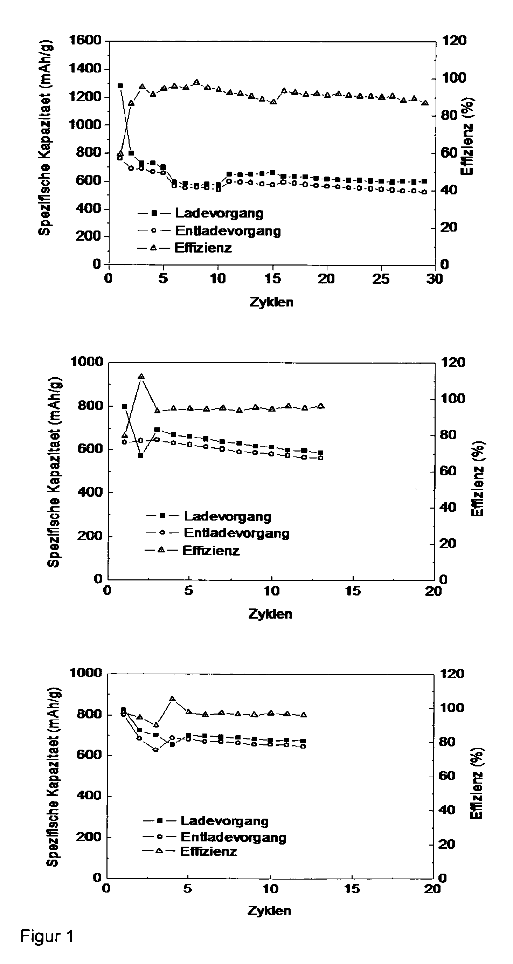

Figur 1 zeigt drei Diagramme zu Messungen mit drei Elektroden, bei denen als Aktivmaterial Li₂S, welches gemäß dem erfindungsgemäßen Verfahren mit Kohlenstoff beschichtet wurde, ausgehend von Saccharose als Kohlenstoffquelle, verwendet wurde. Die Herstellung erfolgte gemäß Beispielen 1 und 2.
Dabei wurde jeweils die spezifische Kapazität (in mAhg/Schwefel) und die Effizienz (in Prozent) gegen die Zyklenanzahl aufgetragen.
Diagramm 1 zeigt eine Messung mit 100 µl Elektrolyt und C/50 = 0,02755 mA, Diagramm 2 mit 45 µl und C/50 = 0,02635 mA und Diagramm 3 mit 30 µl und C/ 50 = 0,02420 mA.
Die Rahmenbedingungen waren für alle drei Messungen jeweils dieselben: C-Rate: C/50
Bei einer C-Rate von C/50 handelt es sich generell um eine angelegte Stromdichte, die ein (Ent-)laden der Elektrode bei voller theoretischer Kapazität (Ladungsaufnahme) in 50 Stunden vorsieht.
Galvanostatische Zyklisierung in einem Spannungsbereich von 1,2 bis 3,5 V Elektrodenfläche: 1,13 cm²
(Galvanostatische Zyklisierung kohlenstoffbeschichteter Li₂S basierter Elektroden unter Verwendung von Saccharose als Kohlenstoffquelle und variierenden Mengen an eingesetztem Elektrolyt: Obere Abbildung 100 µl (C/50 =̂ 0,02755 mA), mittlere Abbildung 45 µl (C/50 =̂ 0,02635 mA) und untere Abbildung 30 µl (C/50 =̂ 0,02420 mA). Angelegte C-Rate: C/50. Cut-off-Potentiale: 1,2 und 3,5 V vs. Li⁺/Li.)

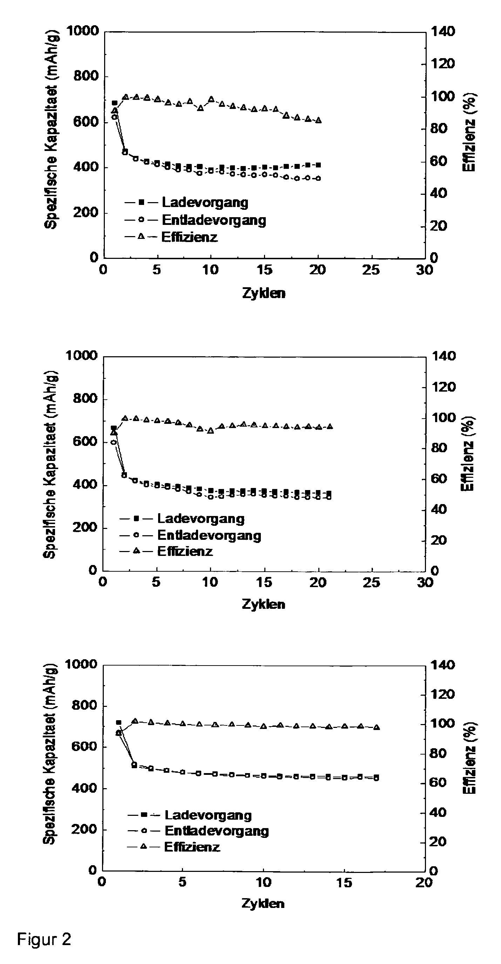

Figur 2 zeigt drei Diagramme zu Messungen mit drei Elektroden, bei denen als Aktivmaterial Li₂S, welches gemäß dem erfindungsgemäßen Verfahren mit Kohlenstoff beschichtet wurde, ausgehend von Polyacrylnitril als Kohlenstoffquelle, verwendet wurde. Die Herstellung erfolgte gemäß Beispielen 1 und 2.
Diagramm 1 zeigt eine Messung mit 60 µl Elektrolyt und C/50 = 0,01524 mA, Diagramm 2 mit 45 µl und C/50 = 0,01617 mA und Diagramm 3 mit 30 µl und C/ 50 = 0,01422 mA.
Die Rahmenbedingungen waren für alle Messungen dieselben wie bei Figur 1. (Galvanostatische Zyklisierung kohlenstoffbeschichteter Li₂S basierter Elektroden unter Verwendung von PAN als Kohlenstoffquelle und variierenden Mengen an eingesetztem Elektrolyt: Obere Abbildung 60 µl (C/50 =̂ 0,01524 mA), mittlere Abbildung 45 µl (C/50 =̂ 0,01617 mA) und untere Abbildung 30 µl (C/50 =̂ 0,01422 mA). Angelegte C-Rate: C/50. Cut-off-Potentiale: 1,2 und 3,5 V vs. Li⁺/Li.)

Figur 3 zeigt ein Diagramm zu einer Messung einer Elektrode gemäß Stand der Technik mit Schwefel als Aktivmaterial mit 30 µl Elektrolyt und C/50 = 0,01358 mA.
Die Rahmenbedingungen waren dieselben wie bei Figur 1 und 2. (Galvanostatische Zyklisierung einer Schwefel-basierten Elektrode. Angelegte C-Rate: C/50 =̂ 0,01358 mA. Cut-off-Potentiale: 1,2 und 3,5 V vs. Li⁺/Li.)

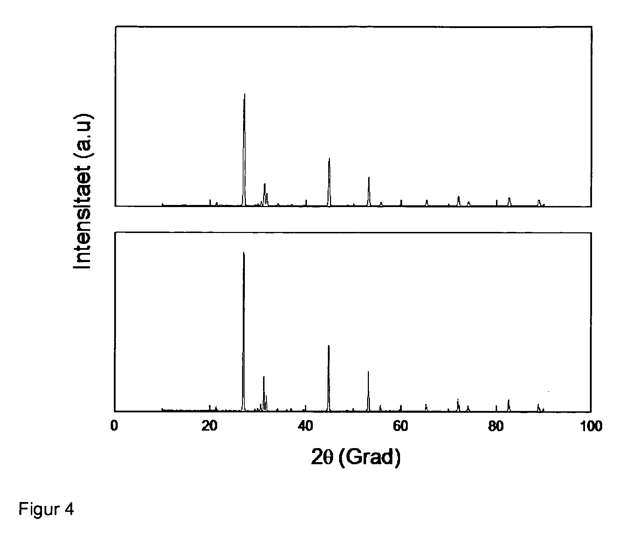

Figur 4 zeigt zwei Röntgenbeugungsdiagramme. Das obere Diagramm zeigt dabei ein Röntgenbeugungsdiagramm von dem Ausgangsmaterial Li₂S. Das untere Diagramm zeigt ein Röntgenbeugungsdiagramm von Li₂S, welches mit dem erfindungsgemäßen Verfahren bei 550°C mit Kohlenstoff beschichtet wurde.

Daraus ist ersichtlich, dass die Struktur von Li₂S auch nach der Kohlenstoffbeschichtung erhalten bleibt.

### Beispiel 1 - Herstellung des Aktivmaterials:

3 g Li₂S wurden zur Verkleinerung der durchschnittlichen Teilchengröße mittels Kugelmühle (30 g ZrO₂-Kugeln) unter Zuhilfenahme von 10 ml Acetonitril als Schmierhilfsmittel vermahlen.
Dabei wurde das Vermahlen bei 200 bis 400 Umdrehungen pro Minute für 20 Minuten durchgeführt und dann 10 Minuten ruhen gelassen. Dies wurde 30 mal wiederholt.

Danach wurden 9 g des gemahlenen Li₂S mit 1 g Saccharose und in einem zweiten Ansatz 9 g des gemahlenen Li₂S mit 1 g Polyacrylnitril-Lösung (hergestellt aus 1 g PAN und 9 g NMP) für jeweils 30 Minuten in einem Mörser vermischt.

Anschließend wurden die Gemische in einen Rohrofen überführt.

Dort wurde unter Stickstoffatmosphäre die Temperatur von Zimmertemperatur mit einer Aufheizrate von 3°C/Minute auf 550°C erhöht und diese Temperatur für 3 Stunden unter Stickstoffatmosphäre (isothermal) gehalten.

### Beispiel 2 - Herstellung des Aktivmaterials:

Es wurde zunächst wie in Beispiel 1 vorgegangen.

Abweichend wurde in dem Rohrofen unter Stickstoffatmosphäre die Temperatur von Zimmertemperatur mit einer Aufheizrate von 3°C/Minute auf 300°C erhöht und diese Temperatur für 2 Stunden gehalten.
Anschließend wurde die Temperatur für bei gleicher Aufheizrate auf 750°C hochgeheizt und für 3 Stunden unter Stickstoffatmosphäre (isothermal) gehalten.

### Beispiel 3 - Herstellung einer Elektrode:

Es wurden jeweils 40 g der in Beispiel 1 hergestellten Aktivmaterialien mit 50 g Super P^{(R)} Li in einem Mischer (Kugelmühle) bei 200 bis 400 Umdrehungen pro Minute für eine Stunde vermischt, dann wurde 10 Minuten pausiert. Dies wurde dreimal wiederholt.

Anschließend wurden jeweils 100 g einer 10%-igen PVDF-Lösung bei 300 bis 600 Umdrehungen pro Minute für eine Stunde vermischt, dann wurde 10 Minuten pausiert. Dies wurde zweimal wiederholt.

Die erhaltenen Produkte wurden für 24 Stunden bei Zimmertemperatur im Trockenraum getrocknet und anschließend nochmals für 2 Stunden bei 60°C, für 2 Stunden bei 80°C und für 2 Stunden bei 100°C.

Mit den getrockneten Kathodenmaterialien wurden Elektroden hergestellt, indem die Bestandteile in einer "pouch bag" angeordnet wurden. Dabei wurden Al/Ni-Spannungskollektoren, als Elektrolyt 0,5 M LiCF₃SO₃ in TEGDME/1,3-Dioxan im Verhältnis 3:7 und als Separator Celgard^{(R)} 2325 verwendet.

### Beispiel 3 - Herstellung einer Elektrode gemäß Stand der Technik (Vergleich):

Es wurde wie in Beispiel 2 vorgegangen, nur daß als Aktivmaterial Schwefel verwendet wurde.

### Ergebnisse:

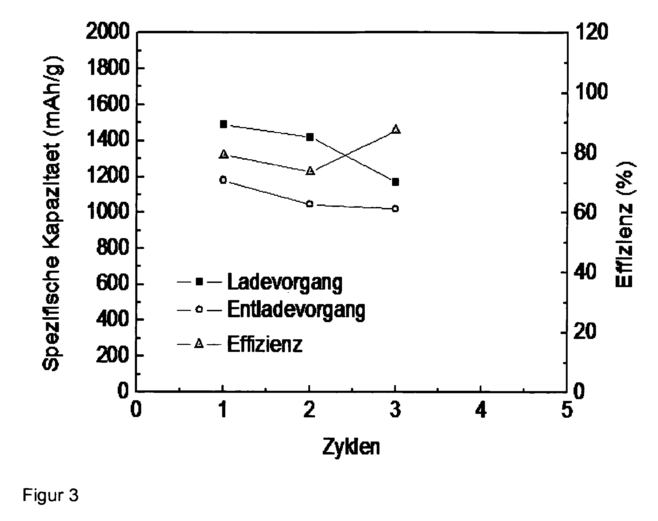

Mit den gemäß Beispiel 2 und Beispiel 3 (Vergleich) hergestellten Elektroden wurden Messungen durchgeführt, deren Ergebnisse in den Figuren 1 (C-beschichtetes Li₂S; Ausgangsmaterial: Saccharose) und 2 (C-beschichtetes Li₂S; Ausgangsmaterial: Polyacrylnitril) sowie Figur 3 (Schwefel, unbeschichtet = Vergleich) dargestellt sind.

Aus den Diagrammen der Figuren 1 bis 3 ist ersichtlich, dass die Elektrode gemäß Stand der Technik eine erheblich geringere Effizienz aufweist, als die Elektroden mit dem Aktivmaterial gemäß vorliegender Erfindung.

Weiterhin ist ersichtlich, dass die Elektroden mit dem Aktivmaterial gemäß vorliegender Erfindung Im Vergleich zu der Elektrode gemäß Stand der Technik eine verbesserte Zyklenstabilität aufweist.

## Patentansprüche

1. Verfahren zur Herstellung eines Aktivmaterials für Batterien umfassend die folgenden Schritte a) bis d) oder bestehend aus diesen Schritten:
a) Vorlegen elektrochemisch aktiver Partikel,
b) optional Zerkleinern der elektrochemisch aktiven Partikel zu einer durchschnittlichen Teilchengröße, gemessen mittels Rasterelektronenmikroskopie, von kleiner als 2 µm,
c) Zugabe einer organischen Kohlenstoffverbindung, optional in einem geeigneten organischen Lösemittel, und Vermischen,
d) Erhitzen der Mischung unter Schutzgas auf eine Temperatur oberhalb der Zersetzungsgrenze der organischen Verbindung und unterhalb der Zersetzungstemperatur der elektrochemisch aktiven Partikel, wodurch sich die organische Kohlenstoffverbindung zu Kohlenstoff zersetzt und sich dieser als homogene Schicht auf der Oberfläche der elektrochemisch aktiven Partikel abscheidet,
**dadurch gekennzeichnet, dass** als elektrochemisch aktive Partikel Li₂S eingesetzt wird.

2. Verfahren gemäß Anspruch 1, **dadurch gekennzeichnet, dass** die Partikelgröße der elektrochemisch aktiven Partikel durch Vermahlen, insbesondere mittels Kugelmühle und/oder durch manuelles Vermahlen, reduziert wird.

3. Verfahren gemäß Anspruch 1, **dadurch gekennzeichnet, dass** als organische Kohlenstoffverbindung Saccharose und/oder Polyacrylnitril eingesetzt wird.

4. Verfahren gemäß Anspruch 1, **dadurch gekennzeichnet, dass** als organische Kohlenstoffverbindung Polyacrylnitril) und als Lösungsmittel N-Methyl-2-Pyrrolidon eingesetzt wird.

5. Verfahren gemäß Anspruch 1, **dadurch gekennzeichnet, dass** in Schritt d) auf bis zu 850°C, bevorzugt 550 bis 750°C, erhitzt und die Temperatur für 2 bis 5 Stunden, bevorzugt 3 Stunden, bei dieser Temperatur gehalten wird.

6. Verwendung eines Aktivmaterials hergestellt nach einem der vorhergehenden Ansprüche in Elektroden und/oder Batterien.

7. Verwendung eines Aktivmaterials hergestellt nach einem der Ansprüche 1 bis 5 als Kathodenmaterial in Lithium-Metall- und/oder Lithium-Ionen-Batterien.

8. Verfahren zur Herstellung eines Kathodenmaterials, umfassend die Schritte
i) Vorlegen eines gemäß einem der Ansprüche 1 bis 5 hergestellten Aktivmaterials,
ii) Zusetzen mindestens eines elektronisch leitfähigen Additivs, gegebenenfalls unter Zugabe mindestens eines geeigneten Binders,
iia) optional Zugabe weiterer Zusatzstoffe,
iii) Vermischen der Materialien,
iv) Trocknung des erhaltenen Materials.

9. Verfahren nach Anspruch 8, **dadurch gekennzeichnet, dass** es aus den Schritten i) bis iv) besteht.

10. Aktivmaterial für Batterien hergestellt nach einem Verfahren gemäß einem der Ansprüche 1 bis 5.

11. Aktivmaterial für Batterien enthaltend elektrochemisch aktive Li₂S-Partikel, die mit einer homogenen Kohlenstoff-Hülle beschichtet bzw. ummantelt sind, wobei der in der Hülle enthaltene Kohlenstoff durch thermische Zersetzung von Saccharose oder Polyacrylnitril, vorzugsweise durch thermische Zersetzung von Polyacrylnitril erzeugt wird.

## Claims

1. A method of producing an active material for batteries, said method comprising the following steps a) to d) or consisting of these steps:
a) providing electrochemically active particles,
b) optionally comminuting the electrochemically active particles to an average particle size, as measured using scanning electron microscopy, of less than 2 µm,
c) adding an organic carbon compound, optionally in a suitable organic solvent, and mixing,
d) heating the mixture under protective gas to a temperature above the decomposition limit of the organic compound and below the decomposition temperature of the electrochemically active particles, whereby the organic carbon compound decomposes into carbon and this carbon deposits as a homogeneous layer on the surface of the electrochemically active particles,
**characterized in that** the electrochemically active particles used comprise Li₂S.

2. The method as claimed in claim 1, **characterized in that** the particle size of the electrochemically active particles is reduced by grinding, in particular by ball milling and/or by manual grinding.

3. The method as claimed in claim 1, **characterized in that** the organic carbon compound used comprises sucrose and/or polyacrylonitrile.

4. The method as claimed in claim 1, **characterized in that** the organic carbon compound used comprises polyacrylonitrile and the solvent used comprises N-methyl-2-pyrrolidone.

5. The method as claimed in claim 1, **characterized in that** the mixture in step d) is heated to a temperature of up to 850°C, preferably in the range from 550 to 750°C, and the temperature is maintained at this temperature for 2 to 5 hours, preferably 3 hours.

6. The use of an active material obtained as claimed in any preceding claim in electrodes and/or batteries.

7. The use of an active material obtained as claimed in any of claims 1 to 5 as cathode material in lithium-metal and/or lithium-ion batteries.

8. A method of producing a cathode material, said method comprising the steps of
i) providing an active material obtained as claimed in any of claims 1 to 5,
ii) adding at least one electronically conductive additive with or without at least one suitable binder,
iia) optionally adding further added substances,
iii) mixing the materials,
iv) drying the material obtained.

9. The method as claimed in claim 8, **characterized in that** it consists of steps i) to iv).

10. An active material for batteries which is obtained by a method as claimed in any of claims 1 to 5.

11. An active material for batteries, which comprises electrochemically active Li₂S particles coated/sheathed with a homogeneous carbon envelope, wherein the carbon in the envelope is produced by thermal decomposition of sucrose or polyacrylonitrile, preferably by thermal decomposition of polyacrylonitrile.

## Revendications

1. Procédé pour la production d'un matériau actif pour batteries comprenant les étapes a) à d) suivantes, ou constitué par ces étapes, consistant à :
a) disposer au préalable des particules électrochimiquement actives,
b) éventuellement, broyer les particules électrochimiquement actives à une grosseur moyenne des particules, mesurée au moyen de la microscopie électronique à balayage, inférieure à 2 µm,
c) ajouter un composé carboné organique, éventuellement dans un solvant organique approprié, et mélanger,
d) chauffer le mélange sous gaz protecteur à une température supérieure à la limite de décomposition du composé organique et inférieure à la température de décomposition des particules électrochimiquement actives, suite à quoi le composé carboné organique se décompose en carbone et celui-ci se dépose sous forme de couche homogène sur la surface des particules électrochimiquement actives,
**caractérisé en ce qu'**on utilise, comme particules électrochimiquement actives, du Li₂S.

2. Procédé selon la revendication 1, **caractérisé en ce que** la grosseur des particules électrochimiquement actives est réduite par broyage, en particulier au moyen d'un broyeur à billes et/ou par broyage manuel.

3. Procédé selon la revendication 1, **caractérisé en ce qu'**on utilise, comme composé carboné organique, du saccharose et/ou du polyacrylonitrile.

4. Procédé selon la revendication 1, **caractérisé en ce qu'**on utilise, comme composé carboné organique, du polyacrylonitrile et, comme solvant, de la N-méthyl-2-pyrrolidone.

5. Procédé selon la revendication 1, **caractérisé en ce que**, dans l'étape d), on chauffe jusqu'à 850°C, de préférence à 550 jusqu'à 750°C, et on maintient la température pendant 2 à 5 heures, de préférence pendant 3 heures, à cette température.

6. Utilisation d'un matériau actif produit selon l'une quelconque des revendications précédentes dans des électrodes et/ou des batteries.

7. Utilisation d'un matériau actif produit selon l'une quelconque des revendications 1 à 5 comme matériau de cathode dans des batteries au lithium métallique et/ou des batteries lithium-ion.

8. Procédé pour la production d'un matériau de cathode, comprenant les étapes consistant à
i) mettre à disposition un matériau actif produit selon l'une quelconque des revendications 1 à 5.
ii) ajouter au moins un additif électroniquement conducteur, le cas échéant avec addition d'au moins un liant approprié,
iia) éventuellement, ajouter d'autres additifs,
iii) mélanger les matériaux,
iv) sécher le matériau obtenu.

9. Procédé selon la revendication 8, **caractérisé en ce qu'**il est constitué par les étapes i) à iv).

10. Matériau actif pour batteries, produit selon un procédé selon l'une quelconque des revendications 1 à 5.

11. Matériau actif pour batteries, contenant des particules électrochimiquement actives de Li₂S, qui sont revêtues ou enrobées par une enveloppe carbonée homogène, le carbone contenu dans l'enveloppe étant produit par décomposition thermique de saccharose ou de polyacrylonitrile, de préférence par décomposition thermique de polyacrylonitrile.
